# EUROPÄISCHE PATENTSCHRIFT

(11) **EP 3 494 015 B1**
(45) Veröffentlichungstag und Bekanntmachung des Hinweises auf die Patenterteilung: **05.08.2020**
(21) Anmeldenummer: 17734680.6
(22) Anmeldetag: 22.06.2017
(51) Int. Cl.: B60R 25/24

(54) **VERFAHREN ZUM BETREIBEN MINDESTENS EINER FUNKTION EINES KRAFTFAHRZEUGS MITTELS EINER TRAGBAREN SCHLÜSSELVORRICHTUNG**
METHOD FOR PERFORMING A FUNCTION OF A VEHICLE BY MEANS OF A KEY DEVICE
MÉTHODE POUR EFFECTUER UNE FONCTION D'UN VÉHICULE PAR UN DISPOSITIF DE CLÉ

(30) Priorität: 03.08.2016 DE 102016214369
(43) Veröffentlichungstag der Anmeldung: 12.06.2019
(73) Patentinhaber: Audi AG, 85045 Ingolstadt (DE)
(72) Erfinder: WILDING, Werner, 85137 Walting (DE)
(86) Internationale Anmeldenummer: PCT/EP2017/065390
(87) Internationale Veröffentlichungsnummer: WO 2018/024401

(56) Entgegenhaltungen:
- EP-A1- 1 191 486
- DE-A1-102011 011 697
- DE-A1-102015 003 820
- US-A1- 2014 188 310

## Beschreibung

Die Erfindung betrifft ein Verfahren zum Betreiben mindestens einer Funktion eines Kraftfahrzeugs, wobei ein Benutzer des Kraftfahrzeugs mittels einer tragbaren Schlüsselvorrichtung zur Durchführung der mindestens einen Funktion autorisiert ist. Die Erfindung betrifft ebenfalls eine solche Schlüsselvorrichtung.

In vielen Ländern gehört beispielsweise Valet-Parken im Zuge eines Restaurant- oder Hotelbesuchs oder ein Tank- oder Waschservice zu selbstverständlichen Serviceleistungen. Eigens dafür vorgesehene Valet-Parking-Schlüssel sind in der Lage, das Fahrzeug zu starten, können aber zum Beispiel keine Handschuhfächer öffnen. Bei modernen Fahrzeugen entfällt zunehmend die Notwendigkeit eines klassischen Schlüssels, der in ein Zündschloss gesteckt werden muss, um das Fahrzeug zu aktivieren. Eine Start-Taste in Kombination mit einem Nahfeldsender im Schlüssel übernimmt diese Funktion. Bei Servicearbeiten in zum Beispiel einem amerikanischen Waschbetrieb ist es üblich, das Fahrzeug samt Schlüssel einem Mitarbeiter in die Hand zu geben und nach getaner Arbeit abzuholen.

Nachteilig ist hier jedoch, dass Fahrzeugeigentümer ihr Fahrzeug abgeben und erst nach der Rücknahme des Fahrzeugs feststellen, ob ihrem Fahrzeug etwas fehlt oder das Auto eine längere Strecke gefahren wurde als die Entfernung zum Beispiel zum Parkhaus vermuten lässt. Auch der pflegliche Umgang, vor allem mit leistungsstarken Fahrzeugen kann im Nachhinein nicht immer zweifelsfrei sichergestellt werden.

Die DE 10 2014 006 048 A1 beschreibt ein Verfahren für eine intelligente Alarmauslösung beim Valet-Parking eines Kraftfahrzeugs, bei welchem beim Verlassen eines vorgegebenen territorialen Bereichs durch ein Kraftfahrzeug durch eine Überwachungseinheit ein Signal an eine korrespondierende mobile elektronische Einheit ausgegeben wird. Eine Autorisierung kann hierzu jedoch nicht vorgenommen werden.

Die DE 10 2012 223 304 A1 beschreibt ein System zum selektiven Öffnen eines Fahrzeugs, mit einer Valet-Funktion zur Vergabe einer eingeschränkten Nutzungserlaubnis für einen Dienstleister. Hierbei werden zwei Identifikationsroutinen angewendet, bei dem ein Servicedienstleister identifiziert wird. Der Zugriff erfolgt direkt von dem Fremdgerät auf ein Steuergerät des Kraftfahrzeugs, womit jedoch beispielsweise die Gefahren der Übertragung eines Schadprogrammes oder das Nutzen des Steuergeräts als unsichere Eingangstür drohen können.

Die DE 10 2011 011 697 A1 beschreibt ein Schließsystem und Verfahren zum Steuern eines Zugangsberechtigung oder Fahrberechtigung für ein Kraftfahrzeug, bei dem eine Berechtigung zur eingeschränkten Nutzung des Fahrzeugs auf ein Endgerät übertragen wird.

Die oben genannten Nachteile werden nicht oder nur geringfügig behoben.

Eine der Erfindung zugrundeliegende Aufgabe ist das Verbessern einer Zuverlässigkeit einer Autorisierung der Kraftfahrzeugbenutzung in eingeschränktem Maße.

Die Aufgabe wird von dem erfindungsgemäßen Verfahren und der erfindungsgemäßen Schlüsselvorrichtung, sowie der erfindungsgemäßen Steuereinrichtung und dem erfindungsgemäßen Kraftfahrzeug gemäß den unabhängigen Patentansprüchen gelöst. Vorteilhafte Weiterbildungen der Erfindung sind durch die Unteransprüche gegeben.

Die Erfindung basiert auf der Idee, zusätzlich zu einem Identifikationscode, der eine Schlüsseleinrichtung eindeutig identifiziert, einen Autorisierungsdatensatz an eine Schlüsselvorrichtung zu übertragen, wobei das Kraftfahrzeug aus der Schlüsselvorrichtung den Identifikationscode und den Autorisierungsdatensatz empfängt und anhand der empfangenen Daten ermittelt, für welche Funktion des Kraftfahrzeugs der Benutzer autorisiert ist. Damit kann eine bidirektionale Schlüsselvorrichtung mit einem programmierbaren Fahrzeugzugriff bereitgestellt werden. Ein Benutzer kann so Rechte für Dritte über die Schlüsselvorrichtung festlegen. Im Gegensatz zu herkömmlichen Systemen ermöglicht die Erfindung eine doppelte Kontrolle und reduziert eine Gefahr durch funkübertragene Schadprogramme auf eine Steuereinrichtung des Kraftfahrzeugs und damit das Nutzen eines Funksystems als Einfalltür zum unberechtigten Benutzen des Kraftfahrzeugs.

Eine tragbare Schlüsselvorrichtung ist dabei eine Vorrichtung zum Öffnen eines Kraftfahrzeugs, die baulich nicht mit dem Kraftfahrzeug verbunden ist. Die tragbare Schlüsselvorrichtung kann von einem Benutzer getragen werden und kann beispielsweise als Schlüssel und/oder Schlüsselanhänger ausgestaltet sein.

Die erfindungsgemäße tragbare Schlüsselvorrichtung weist dabei eine Kommunikationseinheit auf, also ein Bauteil oder eine Bauteilkomponente, die zur drahtgebundenen oder drahtlosen Kommunikation mit einem anderen Gerät eingerichtet ist und beispielsweise als Transpondereinheit ausgestaltet sein kann. Die Kommunikationseinheit ist dazu eingerichtet, einen Identifikationscode und einen Autorisierungsdatensatz zu empfangen und zu speichern und eine Datenkommunikationsverbindung zu einer Kommunikationseinheit einer Steuereinrichtung des Kraftfahrzeugs bereitzustellen. Dabei ist die Kommunikationseinheit dazu eingerichtet, den Identifikationscode und/oder den Autorisierungsdatensatz an beispielsweise die Steuereinrichtung des Kraftfahrzeugs zu übertragen. Es ergeben sich die oben genannten Vorteile.

Der Identifikationscode ist dabei beispielsweise ein Zahlencode, der die tragbare Schlüsselvorrichtung eindeutig identifiziert. Der Autorisierungsdatensatz ist dabei ein Datensatz, der mindestens eine Funktion beschreibt, zu deren Benutzung der Benutzer autorisiert ist. Der Autorisierungsdatensatz kann dabei beispielsweise ein Autorisierungsprotokoll beschreiben, das beispielsweise mehrere solche Funktionen beschreiben kann.

Das erfindungsgemäße Verfahren zum Betreiben des Kraftfahrzeugs, wobei der Benutzer des Kraftfahrzeugs mittels einer tragbaren Schlüsselvorrichtung zum Auslösen der mindestens einen Funktion autorisiert ist, und wobei die Schlüsselvorrichtung den Identifikationscode und den Autorisierungsdatensatz aufweist, beispielsweise speichert, weist die folgenden, durch die Steuereinrichtung des Kraftfahrzeugs durchgeführten Schritte auf. Die Steuereinrichtung ist dabei ein Gerät oder eine Gerätekomponente des Kraftfahrzeugs, die zum Empfangen, Erzeugen und Übertragen von Steuersignalen eingerichtet ist.

Zunächst erfolgt ein Empfangen des Autorisierungsdatensatzes und des Identifikationscodes aus der Schlüsselvorrichtung. Anhand eines in der Steuereinrichtung gespeicherten Identifikationscodes und eines in der Steuereinrichtung gespeicherten Autorisierungsdatensatzes erfolgt ein Ermitteln, ob der empfangene Autorisierungsdatensatz und der empfangene Identifikationscode einer vorbestimmten Kombination entsprechen, also der Kombination des in der Steuereinrichtung gespeicherten Identifikationscodes und der dem in der Steuereinrichtung gespeicherten Identifikationscode zugeordneten Autorisierungsdatensatz. Bei einem Entsprechen der vorbestimmten Kombination erfolgt ein Freigeben der mindestens einen Funktion.

Mit dem erfindungsgemäßen Verfahren können Rechte für Dritte festgelegt werden. Beispielsweise kann die erfindungsgemäße Schlüsselvorrichtung als sogenannter "Valet-Parking-Schlüssel" ausgestaltet sein, sodass der Benutzer beispielsweise für bestimmte Serviceleistungen, beispielsweise für Tanken oder Waschen des Kraftfahrzeugs, den entsprechenden Benutzer für eine vorgenommene Auswahl von Funktionen des Kraftfahrzeugs autorisieren kann. Der Zugriff auf das Kraftfahrzeug erfolgt nicht direkt auf einen Aktor des Kraftfahrzeugs, also nicht direkt auf ein die mindestens eine Funktion durchführendes Steuergerät, sondern indirekt über die Steuereinrichtung. Mit anderen Worten ergibt sich vorteilhafterweise, dass Betriebs- oder Steuergeräte, wie beispielsweise einen Aktor, beispielsweise ein Motor, nicht direkt angesprochen werden. Dem Nutzen der Schlüsselvorrichtung als unsichere Eingangstür um das Kraftfahrzeug zu hacken kann damit wirksam vorgebeugt werden. Außerdem kann der Eigentümer des Kraftfahrzeugs seinen eigenen Kraftfahrzeugschlüssel behalten, muss diesen also nicht aus der Hand geben. Durch das erfindungsgemäße Verfahren entfällt zudem die Notwendigkeit, dass sich zur Kommunikation mit dem Kraftfahrzeug der Eigentümer mit einem Hauptschlüssel in der Nähe des Kraftfahrzeugs befinden muss.

Gemäß einer bevorzugten Ausführungsform des erfindungsgemäßen Verfahrens kann ein Zuordnen des Identifikationscodes zu der Schlüsselvorrichtung durch eine kraftfahrzeugexterne Datenverarbeitungseinrichtung, also beispielsweise einen Internetserver, erfolgen. Durch die kraftfahrzeugexterne Datenverarbeitungseinrichtung kann ebenfalls ein Erstellen des Autorisierungsdatensatzes und Festlegen einer Zugehörigkeit des Autorisierungsdatensatzes zu dem Identifikationscode erfolgen, sowie ein Übertragen des Autorisierungsdatensatzes und des Identifikationscodes die Schlüsselvorrichtung und an die Steuereinrichtung. Hierdurch ergibt sich vorteilhaft, dass der Eigentümer des Kraftfahrzeugs beispielsweise über das Internet, zum Beispiel mithilfe eines mobilen Endgeräts, die Autorisierungsprotokolle und damit die individuellen Nutzerrechte ändern kann, ohne dass das Kraftfahrzeug in der Nähe des Eigentümers sein muss. Die Kommunikation zwischen der kraftfahrzeugexternen Datenverarbeitungseinrichtung und der Steuereinrichtung des Kraftfahrzeugs kann dann beispielsweise über eine Internetverbindung erfolgen.

Gemäß einer weiteren, besonders bevorzugten Ausführungsform des erfindungsgemäßen Verfahrens kann eine Kommunikationseinheit der Steuereinrichtung des Kraftfahrzeugs ein Empfangen einer Bild- und/oder Text- und/oder Sprachinformation aus der Schlüsselvorrichtung und ein Übertragen der empfangenen Bild- und/oder Text- und/oder Sprachinformation an die kraftfahrzeugexterne Datenverarbeitungseinrichtung und/oder an das mobile Endgerät durchführen. Eine Kommunikationseinheit ist eine Gerätekomponente, die zur Datenkommunikation ausgestaltet ist. Die Kommunikationseinrichtung der Steuereinrichtung des Kraftfahrzeugs kann beispielsweise als Schaltkreis der Steuereinrichtung ausgestaltet sein kann. Beispielsweise kann so der Benutzer der Schlüsselvorrichtung eine Textnachricht mittels der Schlüsselvorrichtung an die Steuereinrichtung des Kraftfahrzeugs senden, die das Kraftfahrzeug dann an die Datenverarbeitungseinrichtung und/oder beispielsweise ein Smartphone des Eigentümers übertragen kann. Die beispielhafte Textnachricht kann beispielsweise informieren, dass eine Serviceleistung durchgeführt wurde.

Die genannten Vorteile werden ebenfalls erreicht durch die erfindungsgemäße tragbare Schlüsselvorrichtung, die ein Bedienelement zum Empfangen einer Bedienhandlung eines Benutzers und eine Steuereinheit aufweisen kann, wobei die Steuereinheit der Schlüsseleinrichtung dazu eingerichtet ist, in Abhängigkeit von der empfangenen Bedienhandlung die digitale Bild- und/oder Text- und/oder Sprachinformation zu erzeugen, wobei die Kommunikationseinheit der Schlüsseleinrichtung zum Übertragen der digitalen Bild- und/oder Text- und/oder Sprachinformation eingerichtet sein kann.

Unter dem Bedienelement wird dabei ein Element verstanden, das eine Bedienhandlung empfangen kann, also beispielsweise eine entsprechende Elektronik zum Übertragen einer Berührung aufweisen kann. Vorteilhafterweise kann die tragbare Schlüsselvorrichtung derart ausgestaltet sein, dass das Bedienelement einen berührungssensitiven Bedienbereich und/oder einen berührungssensitiven Bildschirm aufweisen kann.

Erfolgt das Empfangen der Bild- und/oder Text- und/oder Sprachinformation in Antwort auf ein von der Kommunikationseinheit der Steuereinrichtung des Kraftfahrzeugs an die Schlüsselvorrichtung ausgesendeten Anfragesignal, wird dem Eigentümer des Kraftfahrzeugs ermöglicht, beispielsweise eine Statusnachricht von dem Benutzer der Schlüsselvorrichtung anzufordern. Der Eigentümer kann sich dabei also jederzeit erkundigen, ob beispielsweise ein bestimmter Service bereits durchgeführt wurde, wo sich das Kraftfahrzeug befindet oder eine Telefonverbindung mit dem Benutzer der tragbaren Schlüsselvorrichtung aufzubauen. Vorzugsweise kann dabei das Anfragesignal von der kraftfahrzeugexternen Datenverarbeitungseinrichtung und/oder dem mobilen Endgerät stammen, das heißt vorzugsweise kann das Anfragesignal von der kraftfahrzeugexternen Datenverarbeitungseinrichtung und/oder dem mobilen Endgerät erzeugt und an die Kommunikationseinheit des Kraftfahrzeugs übertragen werden. Hierbei kann beispielsweise das Anfragesignal über eine Internetverbindung an die Steuereinrichtung des Kraftfahrzeugs übertragen werden, während das Übertragen des Anfragesignals an die tragbare Schlüsselvorrichtung beispielsweise über eine WLAN- oder Funkverbindung erfolgen kann.

Mit anderen Worten kann der Eigentümer das Anfragesignal beispielsweise direkt an die Kommunikationseinheit der Steuereinrichtung, oder indirekt über die Datenverarbeitungseinrichtung, an die Kommunikationseinheit der Steuereinrichtung des Kraftfahrzeugs senden. Die Kommunikationseinheit der Steuereinrichtung des Kraftfahrzeugs kann dann zum Beispiel über eine WLAN- oder Funkverbindung das Anfragesignal an die Schlüsselvorrichtung - und damit an den Benutzer - senden.

Die mindestens eine Funktion ist dabei vorzugsweise ein Öffnen und/oder Schließen einer Kraftfahrzeugtür, oder mehrerer Kraftfahrzeugtüren, und/oder ein Bereitstellen einer Internetverbindung zwischen der Steuereinrichtung und der kraftfahrzeugexternen Datenverarbeitungseinrichtung und/oder ein Bereitstellen einer vorgegebenen Motorleistung und/oder ein Bereitstellen einer Telefonverbindung zwischen der Steuereinrichtung und der kraftfahrzeugexternen Datenverarbeitungseinrichtung und/oder ein Bereitstellen einer Notruffunktion des Kraftfahrzeugs umfassen. Hierdurch ergibt sich eine sehr hohe Vielfalt an Kombinationen einzelner, freizugebender Funktionen, sowie die Möglichkeit der Kommunikation zwischen Eigentümer und Benutzer.

Die Steuereinrichtung des Kraftfahrzeugs kann gemäß einer weiteren Ausführungsform, beispielsweise automatisiert oder auf Anfrage, eine Information bereitstellen, die einen Betriebszustand des Kraftfahrzeugs und/oder einen Betriebszustand eines Gerätes oder einer Gerätekomponente des Kraftfahrzeugs beschreiben kann, beispielsweise einen Kilometerstand, und diese Information an die kraftfahrzeugexterne Datenverarbeitungseinrichtung und/oder das mobile Endgerät überträgt. Hierdurch kann der Eigentümer des Kraftfahrzeugs schon vor dem Abholen des Kraftfahrzeugs beispielsweise kontrollieren, ob der Benutzer der Schlüsselvorrichtung zum Beispiel nur bis zu einem Parkhaus gefahren ist oder das Auto unautorisiert für eine längere Strecke benutzt hat. Die Auswahl an gewünschten Statusinformationen kann dabei zum Beispiel durch den Eigentümer erfolgen, zum Beispiel durch Festlegen eines Statusprotokolls.

Die oben gestellte Aufgabe wird ebenfalls gelöst durch eine Steuereinrichtung des Kraftfahrzeugs, aufweisend eine Prozessoreinrichtung, die dazu eingerichtet sein kann, die eine Steuereinrichtung betreffenden Verfahrensschritte einer Ausführungsform des erfindungsgemäßen Verfahrens durchzuführen. Die Prozessoreinrichtung kann hierzu zumindest einen Mikroprozessor und/oder einen Mikrocontroller aufweisen. Des Weiteren kann die Prozessoreinrichtung einen Programmcode aufweisen, der dazu eingerichtet ist, bei Ausführen durch die Prozessoreinrichtung die eine Steuereinrichtung betreffenden Verfahrensschritte einer Ausführungsform des erfindungsgemäßen Verfahrens durchzuführen. Der Programmcode kann dabei in einem Datenspeicher der Prozessoreinrichtung gespeichert sein. Es ergeben sich die oben genannten Vorteile.

Die oben gestellte Aufgabe wird ebenfalls gelöst durch ein Kraftfahrzeug, das vorzugsweise als Kraftwagen, insbesondere als Personenkraftwagen, ausgestaltet sein kann. Das erfindungsgemäße Kraftfahrzeug weist eine Ausführungsform der erfindungsgemäßen Steuereinrichtung auf. Es ergeben sich die oben genannten Vorteile.

Die Erfindung wird anhand der beigefügten Zeichnung noch einmal durch konkrete Ausführungsbeispiele näher erläutert. Bei den im Folgenden erläuterten Ausführungsbeispielen handelt es sich um bevorzugte Ausführungsformen der Erfindung. Bei den Ausführungsbeispielen stellen aber die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Ausführungsformen auch durch weitere der bereits beschriebenen Merkmale der Erfindung ergänzbar. Funktionsgleiche Elemente weisen in den Figuren dieselben Bezugszeichen auf. Es zeigt:
- Fig. 1: eine schematische Skizze zu einer Ausführungsform des erfindungsgemäßen Verfahrens;
- Fig. 2: eine schematische Skizze zu einer weiteren Ausführungsform des erfindungsgemäßen Verfahrens; und
- Fig. 3: eine schematische Skizze zu einer Ausführungsform einer erfindungsgemäßen tragbaren Schlüsselvorrichtung.

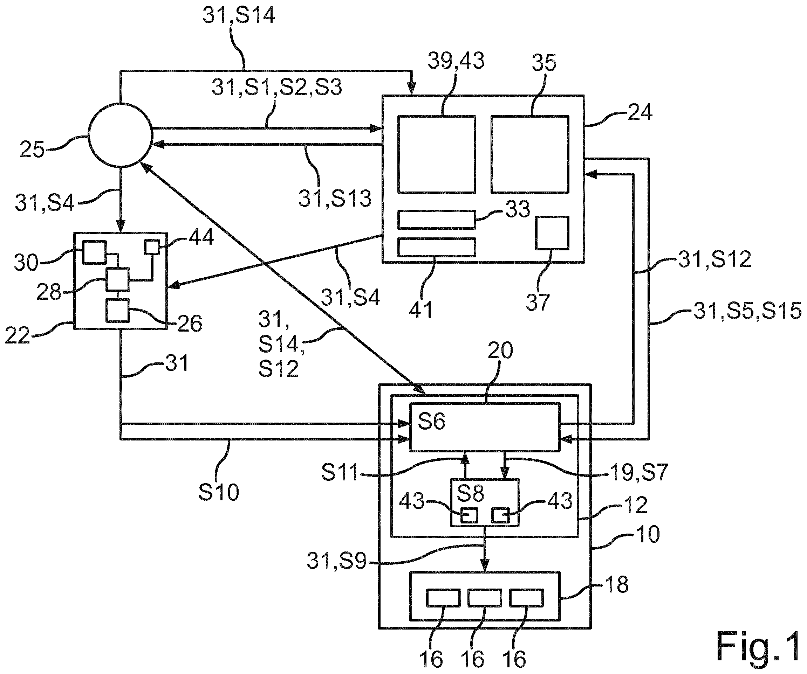

Die Fig. 1 veranschaulicht schematisch das Prinzip des erfindungsgemäßen Verfahrens anhand eines ersten Ausführungsbeispiels. Hierzu zeigt die Fig. 1 ein Kraftfahrzeug 10, das vorzugsweise als Kraftwagen, zum Beispiel als Personenkraftwagen, ausgestaltet sein kann. Das Kraftfahrzeug 10 weist eine Steuereinrichtung 12 auf, die beispielsweise als Steuergerät ausgestaltet sein kann. Vorzugsweise weist die Steuereinrichtung 12 dabei eine Prozessoreinrichtung 14 auf, die beispielsweise als Mikrocontroller und/oder Mikroprozessor ausgestaltet sein kann. Die Prozessoreinrichtung 14 kann dabei auch beispielsweise als sogenannte "main unit" oder Bordnetzsteuergerät bezeichnet werden und kann unter anderem dazu eingerichtet sein, Gerät oder einen Aktor 16 des Kraftfahrzeugs 10 zu steuern, wobei unter dem Begriff "Aktor" ein Gerät verstanden wird, das dazu eingerichtet ist, die mindestens eine Funktion durchzuführen. Der Aktor 16 kann beispielsweise als Regler einer Motorleistung, Schließvorrichtung zum Öffnen und/oder Schließen einer Kraftfahrzeugtür, oder als Kommunikationseinheit zum Bereitstellen einer Telefon- und/oder Internetverbindung ausgestaltet sein. In der Fig. 1 sind dabei die beispielhaften Aktoren 16 als Bestandteil eines Bordnetzes 18 des Kraftfahrzeugs 10 gezeigt.

Die Prozessoreinrichtung 14 kann beispielsweise einen Programmcode umfassen, also beispielsweise eine Software zum Durchführen des erfindungsgemäßen Verfahrens. Der Programmcode kann in einem Datenspeicher der Prozessoreinrichtung 14 (in der Fig. 1 nicht gezeigt) gespeichert sein.

Die Steuereinrichtung 12 kann gemäß dem Beispiel der Fig. 1 weiterhin eine Kommunikationseinheit 20 aufweisen, die beispielsweise als Schaltkreis zum Empfangen von Signalen aus der tragbaren Schlüsselvorrichtung 22, von Signalen aus einer kraftfahrzeugexternen Datenverarbeitungseinrichtung 24 und/oder einem mobilen Endgerät 25 des Benutzers ausgestaltet sein kann. Die Kommunikationseinheit 20 kann ebenfalls zum Aussenden von Signalen an die Prozessoreinrichtung 14 und die genannten Kommunikationspartner eingerichtet sein.

Die tragbare Schlüsselvorrichtung 22 kann beispielsweise als sogenannter "Valet-Parking-Schlüssel" eingerichtet und beispielsweise als Schlüsselanhänger ausgestaltet sein. Mit anderen Worten ist es nicht notwendig, dass die tragbare Schlüsselvorrichtung 22 einen Anteil aufweist, der beim Öffnen oder Schließen einer Kraftfahrzeugtür eine Schließvorrichtung des Kraftfahrzeugs mechanisch erfasst. Mit anderen Worten ist kein Schlüsselbart notwendig. Die Schlüsselvorrichtung 22 hat eine Kommunikationseinheit 26 zum Kommunizieren mit der Steuereinrichtung 12 und eine optionale Steuereinheit 28, die beispielsweise als Schaltkreis auf einem Mikrochip der tragbaren Schlüsselvorrichtung 22 ausgestaltet sein kann, zum Erzeugen von digitalen Bild- und/oder Text- und/oder Sprachinformationen. Die Steuereinheit 28 kann dann dazu eingerichtet sein, ein entsprechendes Bild- und/oder Audiosignal zu erzeugen, dass die digitale Bild- und/oder Text- und/oder Sprachinformation beschreiben kann. Optional kann die Schlüsselvorrichtung 22 ein Bedienelement 30 oder mehrere Bedienelemente 30 aufweisen.

Im Beispiel der Fig. 1 kann Eigentümer des Kraftfahrzeugs 10 beispielsweise einen Hauptschlüssel für das Kraftfahrzeug 10 haben, der ihn zum Auslösen sämtlicher Funktionen des Kraftfahrzeugs 10 autorisiert. Der Eigentümer des Kraftfahrzeugs 10 kann beispielsweise auf Reisen sein und möchte zum Beispiel das Kraftfahrzeug 10 von einem Hoteldienst in ein Parkhaus bringen lassen wollen, und beispielsweise den Service des Hotels angewiesen haben, das Auto auch noch waschen und zu reinigen. Möchte er beispielsweise nicht, dass das Servicepersonal seinen Kofferraum reinigt, weil sich darin beispielsweise ein Gepäckstück oder Unterlagen befinden, auf die niemand anders Zugriff haben soll, wäre es für ihn nachteilig, seinen Hauptschlüssel an das Servicepersonal zu geben.

In dieser Situation ist es für ihn hilfreich, neben dem Hauptschlüssel eine oder mehrere zusätzliche Schlüsselvorrichtungen 22 zu haben, mittels derer das Servicepersonal nur zum Auslösen von ihm bestimmter Funktionen autorisiert wird. Eine solche Schlüsselvorrichtung 22 kann auch als "Valet-Parking-Schlüssel" bezeichnet werden.

Zum Festlegen der Funktionen, für die das Servicepersonal mittels der tragbaren Schlüsselvorrichtung 22 autorisiert werden soll, kann der Eigentümer des Kraftfahrzeugs 10 beispielsweise sein mobiles Endgerät 25, beispielsweise ein Smartphone oder einen Tablet-PC, benutzen und damit die tragbare Schlüsselvorrichtung 22 programmieren. Das Programmieren der tragbaren Schlüsselvorrichtung 22 stellt dabei eine optionale Möglichkeit des Festlegens der zugelassenen Funktionen des Kraftfahrzeugs 10 dar, das alternativ auch beispielsweise durch einen Hersteller des Kraftfahrzeugs 10 erfolgen kann, der beispielsweise das Festlegen der zugelassenen Funktionen schon im Werk durchführen kann.

Legt der Eigentümer des Kraftfahrzeugs 10 die Autorisierung fest, so kann er beispielsweise über eine Datenkommunikationsverbindung 31 zwischen dem mobilen Endgerät 25 und der kraftfahrzeugexternen Datenverarbeitungseinrichtung 24, beispielsweise eine Internetverbindung, mit der kraftfahrzeugexternen Datenverarbeitungseinrichtung 24 kommunizieren. Die kraftfahrzeugexterne Datenverarbeitungseinrichtung 24 kann beispielsweise als Server des Kraftfahrzeugherstellers ausgestaltet sein, der zum Beispiel eine Datenbank mit Kundenprofilen umfassen kann. Der Eigentümer des Kraftfahrzeugs 10 kann sich beispielsweise unter Angabe einer Kundennummer 33 in sein Kundenprofil einloggen, wobei das Kundenprofil zum Beispiel ebenfalls eine Identifikationsnummer 35 des Kraftfahrzeugs 10 und/oder ein Passwort 37, zum Beispiel ein Passwort, zum Erstellen einer Datenkommunikationsverbindung 31 zwischen dem Kraftfahrzeug 10 und der Datenverarbeitungseinrichtung 24 gespeichert sein kann. Die Datenverarbeitungseinrichtung 24 kann zum Beispiel ebenfalls eine Software bereitstellen, mittels derer der Eigentümer des Kraftfahrzeugs 10 festlegen kann, welche Schlüsselvorrichtung 22 für welche Funktionen des Kraftfahrzeugs 10 autorisieren kann. Mithilfe des mobilen Endgeräts 25 kann der Eigentümer beispielsweise ein erstes Autorisierungsprotokoll 39 festlegen (Verfahrensschritt S1) und optional einen Identifikationscode 41 der tragbaren Schlüsselvorrichtung 22 zuordnen (S2). Die Zuordnung des Identifikationscodes 41 zu der Schlüsselvorrichtung 22 kann optional allerdings auch schon vom Hersteller voreingestellt sein. Zusätzlich kann der Eigentümer beispielsweise das Autorisierungsprotokoll 39 dem Identifikationscode 41 zuordnen, das heißt eine Zugehörigkeit des Autorisierungsprotokolls 39 zu dem Identifikationscode 41 festlegen (S3).

Das Autorisierungsprotokoll kann beispielsweise festlegen, dass ein Benutzer der Schlüsselvorrichtung 22 alle Türen des Kraftfahrzeugs 10 öffnen darf, einen voreingestellten Valet-Parking-Modus nutzen, sowie beispielsweise eine Internet- und Telefonverbindung über das Kraftfahrzeug 10 auslösen darf. Das Autorisierungsprotokoll 39 kann dann von der Datenverarbeitungseinrichtung 24 als Autorisierungsdatensatz 43 gespeichert werden.

Programmiert der Eigentümer des Kraftfahrzeugs 10 das Autorisierungsprotokoll beispielsweise von zuhause aus, kann der Autorisierungsdatensatz 43 beispielsweise über eine WLAN-Verbindung an die tragbare Schlüsselvorrichtung 22 übertragen (S4), wenn der Eigentümer die Schlüsselvorrichtung 22 noch nicht an das Servicepersonal übergeben hat. Alternativ kann der Autorisierungsdatensatz 43 und/oder der Identifikationscode 41 der Schlüsselvorrichtung 22 über beispielsweise eine Internetverbindung an die Schlüsselvorrichtung 22 übertragen werden (S4). Die Kommunikationseinheit 26 der tragbaren Schlüsselvorrichtung 22 kann hierzu beispielsweise als dem Fachmann aus dem Stand der Technik bekannten Empfänger für Datenkommunikation ausgestaltet sein.

Der Autorisierungsdatensatz 43 und der Identifikationscode 41 können von der Datenverarbeitungseinrichtung 24 ebenfalls an die Steuereinrichtung 12 übertragen werden (S5), beispielsweise über eine Internetverbindung. Zum Bedienen des Kraftfahrzeugs 10 verwendet das Servicepersonal die tragbare Schlüsselvorrichtung 22. Zum Auslösen der mindestens einen Funktion empfängt die Steuereinrichtung 12, beispielsweise mittels der Kommunikationseinheit 20, den Autorisierungsdatensatz 43 und den Identifikationscode 41 aus der Schlüsselvorrichtung 22 (S6). Die Kommunikation zwischen der Schlüsselvorrichtung 22 und der Kommunikationseinheit 20 des Kraftfahrzeugs 10 kann beispielsweise über Nahfeldkommunikation oder eine Bluetooth-Verbindung erfolgen. Im Verfahrensschritt S7 ermittelt die Steuereinrichtung 12, ob der empfangene Autorisierungsdatensatz 43 und der empfangene Identifikationscode 41 mit der von der Datenverarbeitungseinrichtung 24 empfangenen Kombination übereinstimmen. Hierzu kann die Kommunikationseinheit 20 der Steuereinrichtung 12 beispielsweise den von der Schlüsselvorrichtung 22 empfangenen Autorisierungsdatensatz 43 sowie den von der Schlüsselvorrichtung 22 empfangenen Identifikationscode 41 beispielsweise an die Prozessoreinrichtung 14 übertragen, die einen solchen Vergleich zum Ermitteln einer Übereinstimmung der Kombination (S8) durchführen kann. In der Fig. 1 ist dabei beispielhaft gezeigt, dass in der Prozessoreinrichtung 14 zum Beispiel mehrere, unterschiedliche Autorisierungsdatensätze 43 vorliegen können.

Die in der Prozessoreinrichtung 14 vorliegenden Autorisierungsdatensätze 43 können dabei beispielsweise jeweils ein Aktivitätsprotokoll beschreiben, also ein Protokoll zum Festlegen, welche Funktionen mittels der Schlüsselvorrichtung 22 ausgeführt werden dürfen, und/oder ein Statusprotokoll, also ein Protokoll, das Festlegen kann, welche Informationen der Eigentümer abrufen und/oder von der Schlüsselvorrichtung 22 empfangen kann.

Im vorliegenden Beispiel der Fig. 1 liegt beispielsweise eine Übereinstimmung der Kombinationen vor. Die Steuereinrichtung 12 gibt daraufhin, beispielsweise mittels der Prozessoreinrichtung 14, die mindestens eine Funktion, zu der der Benutzer der Schlüsselvorrichtung 22 gemäß dem Autorisierungsdatensatz 43 autorisiert sein kann, frei (S9). Die Kommunikation kann hierbei über das beispielhaft dargestellte Bordnetz 18 erfolgen, durch das nun beispielhaft ein Öffnen aller Türen, und das Benutzen einer Internet- beziehungsweise Telefonverbindung ermöglicht werden kann. Dabei kann beispielsweise die Kommunikationseinheit als Aktor 16 und/oder die Schließvorrichtung als Aktor 16 aktiviert werden. Alternativ oder zusätzlich kann beispielsweise vorgesehen sein, dass zum Beispiel der Benutzer der Schlüsselvorrichtung 22 nun eine Motorleistung des Kraftfahrzeugs 10 benutzen kann oder aber genau diese durch das Autorisierungsprotokoll geregelt wird, also beispielsweise nur eine vorbestimmte Motorleistung genutzt werden kann.

Ein Status kann beispielsweise einen Kilometerstand oder einen Ladungszustand einer Kraftfahrzeugbatterie beschreiben. Alternativ oder zusätzlich kann ein Status auch einen Status von den durchzuführenden Serviceleistungen beschreiben. Von der Schlüsselvorrichtung 22 kann dann beispielsweise ein Signal an die Kommunikationseinheit 20 des Kraftfahrzeugs 10 übertragen werden, die den Status "Fahrzeug ist fertig gewaschen" oder "Fahrzeug ist geparkt" übertragen kann (S10). Eine solche Statusnachricht kann beispielsweise in Antwort auf eine Bedienhandlung des Benutzers erfolgen, wozu der Benutzer beispielsweise auch das Bedienelement 30, beispielsweise eine Taste, betätigen kann. Alternativ oder zusätzlich kann die Kommunikationseinheit 20 der Steuereinrichtung 12 beispielsweise eine Sprachnachricht empfangen (S10), die beispielsweise mittels eines Mikrofons 44 der Schlüsselvorrichtung 22 aufgenommen und übertragen werden kann. Beschreibt der Status beispielsweise einen Kilometerstand oder einen anderen Status eines Aktors 16 oder eines Steuergeräts des Kraftfahrzeugs 10, so kann dieser Status beispielsweise von der Prozessoreinrichtung 14 über beispielsweise einen Datenbus des Kraftfahrzeugs 10 an die Kommunikationseinheit 20 übertragen werden (S11).

Die Kommunikationseinheit 20 des Kraftfahrzeugs 10 kann dann eine Datenkommunikationsverbindung 31 zu dem kraftfahrzeugexternen Datenserver aufbauen und die Statusinformation oder die beispielhafte Sprachinformation beispielsweise nach Identifizierung des Kraftfahrzeugs 10 über die Identifikationsnummer 37 des Kraftfahrzeugs 10 übertragen (S12). Mit anderen Worten kann sich das Kraftfahrzeug 10 beispielsweise mit einer sogenannten "Pin" in der kraftfahrzeugexternen Datenverarbeitungseinrichtung 24 anmelden und die Statusnachricht übertragen. Die kraftfahrzeugexterne Datenverarbeitungseinrichtung 24 kann dann beispielsweise über eine Internet- und/oder Telefonverbindung den beispielhaften Kilometerstand oder die beispielhafte Sprachnachricht an das mobile Endgerät 25 des Eigentümers übertragen (S13).

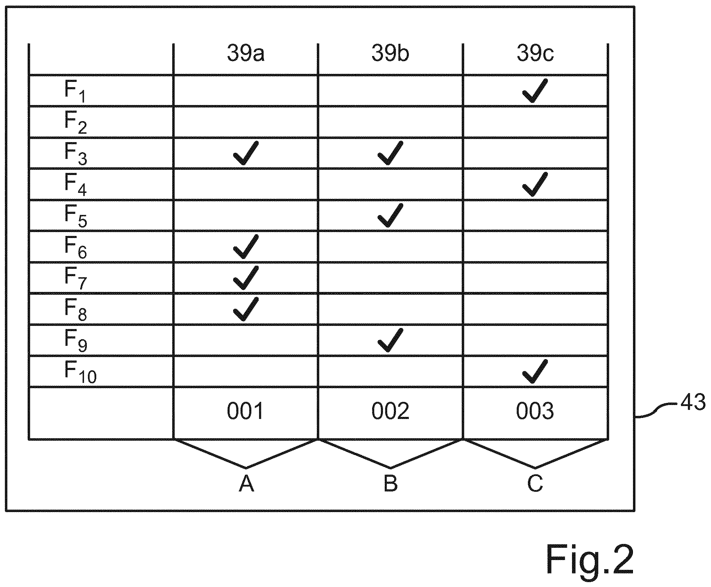

Eine solche Statusabfrage kann optional auch aktiv von dem Eigentümer erfolgen. Hierzu kann der Eigentümer mit dem mobilen Endgerät 25 beispielsweise ein Anfragesignal an die Datenverarbeitungseinrichtung 24 übertragen (S14), wobei die Datenverarbeitungseinrichtung 24 das Anfragesignal dann an die Steuereinrichtung 12 weiterleiten kann (S15). Die Statusabfrage (S14) kann auch direkt von dem mobilen Endgerät 25 und der Steuereinrichtung 12 beziehungsweise der Kommunikationseinheit 20 des Kraftfahrzeugs 10 erfolgen. Die Statusnachricht kann dementsprechend auch von der Steuereinrichtung 12 direkt an das mobile Endgerät 25 übertragen werden (S12). Die Fig. 2 zeigt schematisch ein Beispiel eines Autorisierungsprotokolls 39, das durch den Autorisierungsdatensatz 43 beschrieben werden kann. Dieses Autorisierungsprotokoll 39 kann, wie in der Fig. 2 dargestellt, beispielhaft auf einem Display oder einer anderen Benutzeroberfläche des mobilen Endgeräts 25 angezeigt werden. Beispielhaft kann der Benutzer 3 verschiedene Autorisierungsprotokolle 39a, 39b, 39c programmieren. Jedem der Autorisierungsprotokolle 39a, 39b, 39c kann jeweils ein Identifikationscode 001, 002, 003 für jeweils eine Schlüsselvorrichtung 22 zugeordnet sein. Zeilenweise sind dabei verschiedene Funktionen F₁ bis F₁₀ aufgelistet.

In einem ersten Autorisierungsprotokoll 39a kann beispielsweise festgelegt werden (S3), dass ein Benutzer der Schlüsselvorrichtung mit dem Identifikationscode 001 beispielsweise eine Funktion zum Öffnen aller Türen (F₃), einen Valet-Parking-Modus (F₆), in dem beispielsweise eine Kombination der Funktion zum Starten des Kraftfahrzeugs und zum Freigeben eines Bedienelements 30 oder mehrerer Bedienelemente 30 der Schlüsselvorrichtung 22 mit dem Identifikationscode 001 vorgesehen sein können, sowie die Funktionen zum Bereitstellen einer Internet- und Telefonverbindung (F₇, F₈) benutzen darf. Das Ausführungsprotokoll 39b kann beispielsweise zum Auslösen der Funktionen F₃, F₅ (beispielsweise Aktivieren einer sogenannten "Motormap", die bestimmte Motorfunktionen beschreiben kann) und F₉ (beispielsweise Bereitstellen einer Telefonverbindung einer vorbestimmten Telefonnummer, beispielsweise der Mobilnummer des mobilen Endgeräts 25 des Eigentümers). Das dritte beispielhafte Ausführungsprotokoll 39c kann beispielsweise das Öffnen einer ersten Kraftfahrzeugtür (F₁), eine zweite Motormap (F₄) und das Nutzen einer Notruffunktion (F₁₀) freigeben. Andere optionale Funktionen, beispielsweise das Öffnen einer anderen Kraftfahrzeugtür oder des Kofferraumdeckels (F₂) kann im Beispiel der Fig. 2 für keine der Schlüsselvorrichtungen 22 vorgesehen sein.

Zum Festlegen der Zugehörigkeit des Autorisierungsdatensatzes 43 zu dem Identifikationscode 41 (S3) kann der Benutzer beispielsweise über die beispielhafte Benutzeroberfläche mit der Maus fahren und beispielsweise durch Anklicken eines entsprechenden Feldes ein Häkchen setzen und damit die entsprechende Funktion für eine entsprechende Schlüsselvorrichtung 22 freigeben.

Mit anderen Worten zeigt die Fig. 2 das Ablegen von Schlüsselprofilen durch den Benutzer. Alternative oder zusätzliche optionale Funktionen F₁ bis F₁₀ können beispielsweise einen zugelassene Motorleistung beschreiben, beispielsweise nur 300 PS statt möglicher 600 PS, oder beispielsweise nur 80 Prozent der Leistung, oder beispielsweise das Freigeben einer Notruffunktion anstelle einer Telefon- oder Internetverbindung. Die beispielhafte Regulierung der Motorleistung, die für den Benutzer der Schlüsselvorrichtung 22 freigegeben werden kann, kann beispielsweise für eine Schlüsselvorrichtung 22 programmiert werden, die der Eigentümer des Kraftfahrzeugs 10 beispielsweise seinen Kindern geben kann.

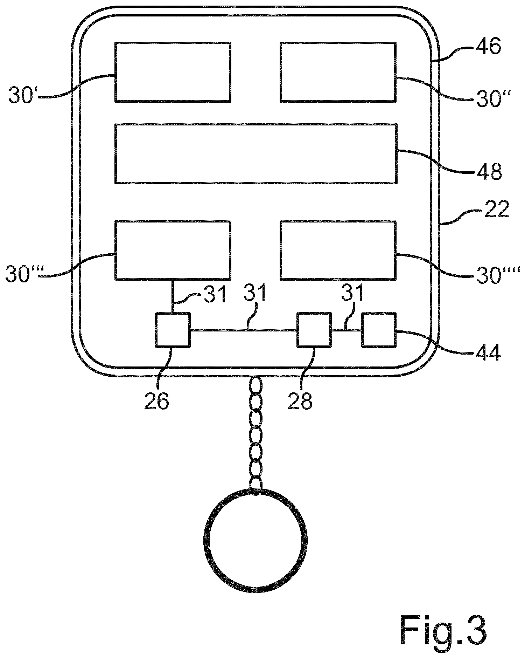

Die Fig. 3 zeigt beispielhaft ein Ausführungsbeispiel einer Schlüsselvorrichtung 22, die beispielsweise als Schlüsselanhänger mit einer Kette und einem Ring (in der Fig. 3 ohne Bezugszeichen) ausgestaltet sein kann. Die Schlüsselvorrichtung 22 kann mehrere Bedienelemente 30 aufweisen, die beispielsweise als Taste oder als Bedienfeld des berührungssensitiven Bildschirms 46 ausgestaltet sein können. Im Beispiel der Fig. 3 zeigt der berührungssensitive Bildschirm 46 ein optionales Logo 48 des Kraftfahrzeugherstellers an.

Jedes Bedienelement 30 kann dabei beispielsweise mit einer bestimmte Funktion belegt sein, sodass beispielsweise ein Antippen des Bedienelements 30' durch das beispielhafte Servicepersonal eine Sprach- oder Textnachricht erzeugt und an die Steuereinrichtung 12 übertragen werden kann (S10), die beispielsweise besagt, dass das Kraftfahrzeug fertig ist, das heißt, dass die Serviceleistung erbracht wurde. Ein Bedienen des beispielhaften Bedienelements 30" kann beispielsweise eine Nachricht erzeugen und übertragen (S10), die sagt, dass das Kraftfahrzeug geöffnet oder geschlossen wurde. Ein Bedienelement 30'" kann beispielsweise vorsehen, dass eine Telefonverbindung oder eine Internetverbindung zu dem Eigentümer des Kraftfahrzeugs, das heißt zu dem beispielhaften mobilen Endgerät 25 des Eigentümers, bereitgestellt werden kann. Eine solche Telefon- oder Internetverbindung kann beispielsweise mittels der Steuereinrichtung 12 bereitgestellt werden. Das Bedienelement 30"" kann beispielsweise vorsehen, dass bei dessen Bedienen eine Notruffunktion aktiviert werden kann. Die Bedienelemente 30', 30", 30'", 30"" können beispielsweise einen Text anzeigen, der die dazugehörige Funktion beschreiben kann. Hat also beispielsweise die Person des Servicepersonals bei der Fahrt in das Parkhaus einen Unfall, so kann mit einem Bedienen des Bedienelements 30"" zum Beispiel schnell und automatisch ein Notruf abgesetzt oder der Eigentümer mithilfe des Bedienelements 30'" benachrichtigt werden.

Optional kann die Schlüsselvorrichtung 22 zum Beispiel ein Mikrofon 44 aufweisen, das der Benutzer dann zum Beispiel zum Telefonieren mit dem KraftFahrzeugeigentümer verwenden kann. Alternativ oder zusätzlich kann vorgesehen sein, dass die Steuereinheit 28 der Schlüsselvorrichtung 22 mit dem Mikrofon 44 verbunden ist und anhand des von dem Mikrofon 44 aufgezeichneten Sprachsignals eine Spracherkennung durchführen kann. Die Steuereinheit 28 kann dann beispielsweise eine entsprechende digitale Nachricht, beispielsweise eine Textnachricht, erzeugen und mittels der Kommunikationseinheit 26 an das Kraftfahrzeug 10 und/oder an die Datenverarbeitungseinrichtung 24 und/oder an das mobile Endgerät 25 übertragen. Ergänzend sei an dieser Stelle erwähnt, dass das Übertragen eines Signals, das die empfangene Bedienhandlung beschreiben kann, ebenfalls beispielhaft mittels der Kommunikationseinheit 26 an beispielsweise die Steuereinrichtung 12 übertragen kann. Der Übersicht halber ist eine entsprechende Datenkommunikationsverbindung 31 nur zwischen dem Bedienelement 30'" und der Kommunikationseinheit 26 gezeigt. Die Kommunikation zwischen der Kommunikationseinheit 26 und den weiteren Bedienelementen 30', 30", 30"" kann über die gleiche Art und Weise erfolgen.

Gemäß einem weiteren Ausführungsbeispiel können die Schlüsselvorrichtung 22 und/oder das Bedienelement 30 beispielsweise einen berührungssensitiven Bildschirm 46 und/oder einen berührungssensitiven Bedienbereich aufweisen, der dazu eingerichtet sein kann, eine Fingerbewegung auf dem Bedienelement 30 zu erkennen und anhand der Fingerbewegung beispielsweise ein Wort oder einen Buchstaben zu erkennen, den der Eigentümer mit seinem Finger auf das Bedienelement 30 gemalt haben kann. Bei einer solchen Eingabeerkennung kann anhand des erkannten Buchstabens oder des erkannten Wortes beispielsweise ermittelt werden, dass der Benutzer beispielhaft das Wort "okay" auf das Bedienelement 30 geschrieben hat, und eine entsprechende, voreingestellte Textnachricht an die Steuereinrichtung 12 übertragen.

Die oben beschriebenen Ausführungsbeispiele beschreiben das Prinzip der Erfindung, mithilfe der Schlüsselvorrichtung 22 voreingestellte Aktivierungsstufen an das Kraftfahrzeug 10 zu übermitteln. Hierdurch ist eine bidirektionale Schlüsselvorrichtung 22, beispielsweise ein Valet-Parking-Schlüssel, mit programmierbarem Fahrzeugzugriff bereitgestellt. Vorteilhaft wird dadurch die Möglichkeit geboten, dass der Eigentümer des Kraftfahrzeugs 10 beispielsweise einen Parkvorgang und einen Vorgang zum Tanken, Waschen oder Laden, beispielsweise einen aktuellen Status der Servicearbeiten vor der Rückgabe überprüfen kann. Bei einem elektrischen Laden der Fahrzeugbatterien kann deren Ladezustand beispielsweise über ein Anwenderprogramm ("App") über das Kraftfahrzeug 10 an das mobile Endgerät 25 übermittelt werden.

Die Schlüsselvorrichtung 22 kann je nach Kraftfahrzeug 10 unterschiedliche Funktionen ausführen lassen, die wesentlich über übliche Funktionen eines Funkschlüssels aus dem Stand der Technik hinausgehen. Gemäß einem Ausführungsbeispiel kann der Eigentümer sich zum Beispiel über eine Software oder den Kraftfahrzeughändler einstellen oder einstellen lassen, welche Befugnisse dem Benutzer der Schlüsselvorrichtung 22 bei Aktivieren des Kraftfahrzeugs 10 zur Verfügung stehen. Eine Zutrittsbeschränkung kann beispielsweise sein, das Öffnen nur der Fahrertür, das Öffnen aller Türen gegebenenfalls ohne Kofferraum, und so weiter. Beispielhaft kann eine aktive Internetnutzung für Dritte gesperrt werden, gegebenenfalls kann nur das Senden zu einem mobilen Endgerät 25 des Eigentümers, beispielsweise einem Smartphone, möglich sein, oder es können vom Eigentümer ausgewählte Aktionen freigegeben werden, beispielsweise nur Telefonieren.

Beispielhaft kann für das Kraftfahrzeug 10 in einem "Valet-Parking-Modus" eine Motorleistung nur eingeschränkt freigegeben werden.

Das erfindungsgemäße Verfahren und die erfindungsgemäße Schlüsselvorrichtung 22 können weiterhin zum Beispiel eine Statusanzeige und/oder einen Abruf für Servicearbeiten ermöglichen. Werden beispielsweise Serviceleistungen wie Tanken, Waschen, Reinigen, und so weiter genutzt, kann die tragbare Schlüsselvorrichtung 22, die beispielsweise als Valet-Parking-Schlüssel ausgestaltet sein kann, statt des eigentlichen Schlüssels, also statt des Hauptschlüssels Eigentümers, weitergegeben werden. Auf der Schlüsselvorrichtung 22 befindet sich eine Kommunikationseinheit, die auch als Transpondereinheit bezeichnet werden kann, auf Basis von beispielsweise "Bluetooth" oder "Near Field Communication" (NFC, Nahfeldkommunikation). Ein jeweiliges Signal kann von der Schlüsselvorrichtung 22 auf das Kraftfahrzeug 10 und von dort über beispielsweise eine fahrzeuginterne Schnittstelle an das mobile Endgerät 25 des Fahrzeugeigentümers weitergeleitet werden. Ein einfaches Signal kann dabei beispielsweise sein: "Fahrzeug ist fertig gewaschen", "gereinigt" und so weiter. Weitere Möglichkeiten wären zum Beispiel ein Notsignal, das von Servicepersonal mittels der Schlüsselvorrichtung 22 ausgelöst werden kann und vom Kraftfahrzeug 10 an das mobile Endgerät 25 des Eigentümers gesendet werden kann. Dies kann zum Beispiel möglich sein, wenn zum Beispiel ein Notfall vorliegt (Beschädigung, Unfall, beziehungsweise Bedarf an Rückfragen, und so weiter).

Mit anderen Worten legt der Eigentümer über die Schlüsselvorrichtung 22 Rechte für Dritte fest. Zusätzlich kann mit dieser Schlüsselvorrichtung 22 zum Beispiel eine Ruffunktion verbunden sein, die dem Eigentümer signalisieren kann, dass Servicearbeiten an seinem Kraftfahrzeug 10 fertiggestellt wurden. Vorteilhaft sind ebenfalls ein eingeschränkter Zugang zum Kraftfahrzeug 10 sowie ein eingeschränkter Zugriff auf die Fahrzeugkommunikation/Internet oder zum Beispiel eine gedrosselte Motorleistung ebenfalls umsetzbar, sofern das Kraftfahrzeug 10 die physikalischen Voraussetzungen mitbringt. Vor Rückgabe der Schlüsselvorrichtung 22 an den Eigentümer kann die Schlüsselvorrichtung 22 die gewünschten Daten über die Fahrzeugkommunikation an den Eigentümer übermitteln, bevor dieser das Kraftfahrzeug 10 in Empfang nehmen kann (zum Beispiel gefahrene Strecke, Vollgasanteil, Telefonate, etc.).

Gemäß einem weiteren Ausführungsbeispiel stellt die Schlüsselvorrichtung 22 eine Erweiterung zu dem sogenannten "kessy-System" dar, das heißt einem Funkschlüsselsystem, wobei die erfindungsgemäße Erweiterung in Form einer zusätzlichen Datenübertragung, beispielsweise einer Nahfelddatenübertragung, voreingestellte Aktivierungsstufen an das Kraftfahrzeug 10 übermittelt. Das Servicepersonal kann nur die freigeschalteten Funktionen nutzen. Durch beispielsweise den Zugriff auf einen festgelegten Rufkanal in der Fahrzeugkommunikation (zum Beispiel über Bluetooth) können zum Beispiel vorab vom Fahrzeugeigentümer festgelegte Fahrzeuginformationen automatisiert an den Eigentümer weitergeleitet werden, sobald das Kraftfahrzeug 10 wieder gestartet wird.

Je nach technischer Ausprägung oder Form der Schlüsselvorrichtung 22 können beispielsweise über definierte Schalter, Touchfelder oder zum Beispiel als Stimmennachricht kurze Benachrichtigungen an den Fahrer weitergeleitet werden (zum Beispiel "Fahrzeug ist fertig gewaschen und getankt - bitte abholen"). Diese Funktion kann ebenfalls von der Schlüsselvorrichtung 22 an das Kraftfahrzeug 10 und über die Fahrzeugkommunikation an das mobile Endgerät 25 (zum Beispiel Smartphone, Smartwatch oder Tablet) weitergeleitet werden.

Beispielsweise kann der Kraftfahrzeughersteller einen Softwarerahmen anbieten, der dem Eigentümer ermöglichen kann, je nach Fahrzeugausstattung bestimmte Funktionen F₁ bis F₁₀ über die Schlüsselvorrichtung 22 freizuschalten. Der programmierte und codierte Datensatz 43 kann gleichzeitig an die Schlüsselvorrichtung 22 und an das Kraftfahrzeug 10 übermittelt werden (S4, S5).

Das Kraftfahrzeug 10 hat somit zum entsprechenden Schlüsselcode einen "Aktionsplan" vorliegen. In einer weiteren Ausprägung kann der Eigentümer beispielsweise menügeführt bestimmte Freischaltungen selbst durchführen, in einer weiteren können die Einstellungen über beispielsweise den Kraftfahrzeughersteller oder die Vertragswerkstatt vorgenommen werden.

## Patentansprüche

1. Verfahren zum Betreiben eines Kraftfahrzeugs (10), wobei ein Benutzer des Kraftfahrzeugs (10) mittels einer tragbaren Schlüsselvorrichtung (22) zum Auslösen mindestens einer Funktion autorisiert ist, und wobei die Schlüsselvorrichtung (22) einen Identifikationscode (41), der die Schlüsselvorrichtung (22) eindeutig identifiziert, und einen Autorisierungsdatensatz (43), der die mindestens eine Funktion beschreibt, und dem Identifikationscode (41) zugeordnet ist, für die der Benutzer mittels der durch den Identifikationscode (41) identifizierten Schlüsselvorrichtung (22) autorisiert ist, aufweist, aufweisend die durch eine Steuereinrichtung (12) des Kraftfahrzeugs (10) durchgeführten Schritte:
- Empfangen des Autorisierungsdatensatzes (43) und des Identifikationscodes (41) aus der Schlüsselvorrichtung (22, S6),
- anhand eines in der Steuereinrichtung (12) gespeicherten Identifikationscodes (41) der Schlüsseleinrichtung (22) und eines in der Steuereinrichtung (12) gespeicherten Autorisierungsdatensatzes (43), der dem Identifikationscode (41) zugeordnet ist, Ermitteln, ob der empfangene Autorisierungsdatensatz (43) und der empfangene Identifikationscode (41) einer vorbestimmten Kombination entsprechen (S8), und
- bei Entsprechen der vorbestimmten Kombination Freigeben der mindestens einen Funktion (S9).

2. Verfahren nach Anspruch 1, aufweisend die durch eine kraftfahrzeugexterne Datenverarbeitungseinrichtung (24) durchgeführten Schritte:
- Zuordnen des Identifikationscodes (41) zu der Schlüsselvorrichtung (22, S2),
- Erstellen des Autorisierungsdatensatzes (43, S1) und Festlegen einer Zugehörigkeit des Autorisierungsdatensatzes (43) zu dem Identifikationscode (41, S3), und
- Übertragen des Autorisierungsdatensatzes (43) und des Identifikationscodes (41) an die Schlüsselvorrichtung (22) und an die Steuereinrichtung (12, S4, S5).

3. Verfahren nach einem der vorhergehenden Ansprüche, aufweisend die durch eine Kommunikationseinheit (20) der Steuereinrichtung (12) durchgeführten Schritte:
- Empfangen einer Bild- und/oder Text- und/oder Sprachinformation aus der Schlüsselvorrichtung (22, S10), und
- Übertragen der empfangenen Bild- und/oder Text- und/oder Sprachinformation an die kraftfahrzeugexterne Datenverarbeitungseinrichtung (24) und/oder an ein mobiles Endgerät (25, S12).

4. Verfahren nach Anspruch 3,
wobei das Empfangen der Bild- und/oder Text- und/oder Sprachinformation in Antwort auf ein von der Kommunikationseinheit (20) der Steuereinrichtung (12) des Kraftfahrzeugs (10) an die Schlüsselvorrichtung (22) ausgesendeten Anfragesignal (S14) erfolgt, vorzugsweise wobei das Anfragesignal (S14) von der kraftfahrzeugexternen Datenverarbeitungseinrichtung (24) und/oder dem mobilen Endgerät (25) stammt.

5. Verfahren nach einem der vorhergehenden Ansprüche, aufweisend die durch eine Kommunikationseinheit (20) der Steuereinrichtung (12) durchgeführten Schritte:
- Bereitstellen einer Information, die einen Betriebszustand des Kraftfahrzeugs (10) und/oder eines Gerätes des Kraftfahrzeugs (10, S11), und
- Übertragen der Information an die kraftfahrzeugexterne Datenverarbeitungseinrichtung (24) und/oder an ein mobiles Endgerät (25, S12).

6. Verfahren nach einem der vorhergehenden Ansprüche, wobei die mindestens eine Funktion ein Öffnen und/oder Schließen einer Kraftfahrzeugtür, und/oder ein Bereitstellen einer Internetverbindung zwischen der Steuereinrichtung (12) und der kraftfahrzeugexternen Datenverarbeitungseinrichtung (24) und/oder ein Bereitstellen einer vorgegebenen Motorleistung und/oder ein Bereitstellen einer Telefonverbindung zwischen der Steuereinrichtung (12) und der kraftfahrzeugexternen Datenverarbeitungseinrichtung (24) und/oder ein Bereitstellen einer Notruffunktion des Kraftfahrzeugs (10) umfasst.

7. Tragbare Schlüsselvorrichtung (22), aufweisend eine Kommunikationseinheit (26), die dazu eingerichtet ist,
- einen Identifikationscode (41) der Schlüsseleinrichtung (22) und einen Autorisierungsdatensatz (43), der dem Identifikationscode (41) zugeordnet ist, zu empfangen und zu speichern,
- eine Datenkommunikationsverbindung (31) zu einer Kommunikationseinheit (20) einer Steuereinrichtung (12) eines Kraftfahrzeugs (10) bereitzustellen, wobei die Kommunikationseinheit (26) der Schlüsselvorrichtung (22) zum Übertragen von dem Identifikationscode (41) und dem Autorisierungsdatensatz (43) eingerichtet ist,
- ein Bedienelement (30) zum Empfangen einer Bedienhandlung eines Benutzers, vorzugsweise wobei das Bedienelement (30) einen berührungssensitiven Bedienbereich und/oder einen berührungssensitiven Bildschirm (46) aufweist, und
- eine Steuereinheit (28), die dazu eingerichtet ist, in Abhängigkeit von der empfangenen Bedienhandlung eine digitale Bild- und/oder Text- und/oder Sprachinformation zu erzeugen,
wobei die Kommunikationseinheit (26) zum Übertragen der digitalen Bild- und/oder Text- und/oder Sprachinformation eingerichtet ist.

8. Steuereinrichtung (12), aufweisend eine Prozessoreinrichtung (14), die dazu eingerichtet ist, die eine Steuereinrichtung (12) betreffenden Verfahrensschritte einer Ausführungsform des erfindungsgemäßen Verfahrens nach einem der Ansprüche 1-6 durchzuführen.

9. Kraftfahrzeug (10), aufweisend eine Steuereinrichtung (12) nach Anspruch 8.

## Claims

1. Method for operating a motor vehicle (10), wherein a user of the motor vehicle (10) is authorised to trigger at least one function by means of a portable key device (22), and wherein the key device (22) has an identification code (41) which uniquely identifies the key device (22), and an authorisation data set (43) which describes the at least one function, and is associated with the identification code (41), for which function the user is authorised by means of the key device (22) identified by the identification code (41), having the steps carried out by a control device (12) of the motor vehicle (10):
- receiving the authorisation data set (43) and the identification code (41) from the key device (22, S6),
- on the basis of an identification code (41) of the key device (22) stored in the control device (12) and an authorisation data set (43) which is stored in the control device (12) and associated with the identification code (41), determining whether the received authorisation data set (43) and the received identification code (41) correspond to a predetermined combination (S8), and
- if they correspond to the predetermined combination, enabling the at least one function (S9).

2. Method according to claim 1, having the steps carried out by a data processing device (24) external to the motor vehicle:
- association of the identification code (41) with the key device (22, S2),
- preparation of the authorisation data set (43, S1) and establishment of an association of the authorisation data set (43) with the identification code (41, S3), and
- transfer of the authorisation data set (43) and of the identification code (41) to the key device (22) and to the control device (12, S4, S5).

3. Method according to any of the preceding claims, having the steps carried out by a communication unit (20) of the control device (12):
- receiving an item of image and/or text and/or voice information from the key device (22, S10), and
- transfer of the received item of image and/or text and/or voice information to the data processing unit (24) external to the motor vehicle and/or to a mobile terminal (25, S12).

4. Method according to claim 3,
wherein the receiving of the item of image and/or text and/or voice information occurs in response to a query signal (S14) sent by the communication unit (20) of the control device (12) of the motor vehicle (10) to the key device (22), preferably wherein the query signal (S14) comes from the data processing unit (24) external to the motor vehicle and/or from the mobile terminal (25).

5. Method according to any of the preceding claims, having the steps carried out by a communication unit (20) of the control device (12):
- provision of an item of information which an operating state of the motor vehicle (10) and/or of a device of the motor vehicle (10, S11), and
- transfer of the item of information to the data processing device (24) external to the motor vehicle and/or to a mobile terminal (25, S12).

6. Method according to any of the preceding claims, wherein
the at least one function comprises opening and/or closing a motor vehicle door and/or providing an Internet connection between the control device (12) and the data processing device (24) external to the motor vehicle and/or providing a predetermined motor power and/or providing a telephone connection between the control device (12) and the data processing device (24) external to the motor vehicle and/or providing an emergency call function of the motor vehicle (10).

7. Portable key device (22), having a communication unit (26) configured to:
- receive and store an identification code (41) of the key device (22) and an authorisation data set (43) associated with the identification code (41),
- provide a data communication connection (31) to a communication unit (20) of a control device (12) of a motor vehicle (10), wherein the communication unit (26) of the key device (22) is configured to transfer the identification code (41) and the authorisation data set (43),
- an operating element (30) for receiving an operating action of a user, preferably wherein the operating element (30) comprises a touch-sensitive operating area and/or a touch-sensitive screen (46), and
- a control unit (28) configured to generate, depending on the received operating action, an item of digital image and/or text and/or voice information,
wherein the communication unit (26) is configured to transfer the item of digital image and/or text and/or voice information.

8. Control device (12), having a processor device (14) which is configured to carry out the method steps, relating a control device (12), of an embodiment of the method according to the invention in accordance with any of claims 1-6.

9. Motor vehicle (10), having a control device (12) according to claim 8.

## Revendications

1. Procédé de fonctionnement d'un véhicule automobile (10), dans lequel un utilisateur du véhicule automobile (10) est autorisé à déclencher au moins une fonction au moyen d'un dispositif formant clé (22) portable, et dans lequel le dispositif formant clé (22) présente un code d'identification (41), qui identifie le dispositif formant clé (22) de façon unique, et un ensemble de données d'autorisation (43), qui décrit au moins une fonction, et est associé au code d'identification (41), pour laquelle l'utilisateur est autorisé au moyen du dispositif formant clé (22) identifié par le code d'identification (41), présentant les étapes mises en œuvre par un système de commande (12) du véhicule automobile (10) :
- la réception de l'ensemble de données d'autorisation (43) et du code d'identification (41) à partir du dispositif formant clé (22, S6),
- sur la base d'un code d'identification (41), mis en mémoire dans le système de commande (12) du dispositif formant clé (22), et d'un ensemble de données d'autorisation (43), mis en mémoire dans le système de commande (12), qui est associé au code d'identification (41), le fait de déterminer si l'ensemble de données d'autorisation (43) reçu et le code d'identification (41) reçu correspondent (S8) à une combinaison prédéterminée, et
- lors d'une correspondance de la combinaison prédéterminée, la libération de l'au moins une fonction (S9).

2. Procédé selon la revendication 1, présentant les étapes mises en œuvre par un système de traitement de données (24) externe au véhicule automobile :
- l'association du code d'identification (41) au dispositif formant clé (22, S2),
- l'établissement de l'ensemble de données d'autorisation (43, S1) et la définition d'une appartenance de l'ensemble de données d'autorisation (43) au code d'identification (41, S3), et
- la transmission de l'ensemble de données d'autorisation (43) et du code d'identification (41) au dispositif formant clé (22) et au système de commande (12, S4, S5).

3. Procédé selon l'une quelconque des revendications précédentes, présentant les étapes mises en œuvre par une unité de communication (20) du système de commande (12) :
- la réception d'une information d'image et/ou de texte et/ou vocale du dispositif formant clé (22, S10), et
- la transmission de l'information d'image et/ou de texte et/ou vocale reçue au système de traitement de données (24) externe au véhicule automobile et/ou à un terminal mobile (25, S12).

4. Procédé selon la revendication 3,
dans lequel la réception de l'information d'image et/ou de texte et/ou vocale s'effectue en réponse à un signal de demande (S14) envoyé par l'unité de communication (20) du système de commande (12) du véhicule automobile (10) au dispositif formant clé (22), de préférence dans lequel le signal de demande (S14) provient du système de traitement de données (24) externe au véhicule automobile et/ou du terminal mobile (25).

5. Procédé selon l'une quelconque des revendications précédentes, présentant les étapes mises en œuvre par une unité de communication (20) du système de commande (12) :
- la fourniture d'une information, qui un état de fonctionnement du véhicule automobile (10) et/ou d'un appareil du véhicule automobile (10, S11), et
- la transmission de l'information au système de traitement de données (24) externe au véhicule automobile et/ou à un terminal mobile (25, S12).

6. Procédé selon l'une quelconque des revendications précédentes, dans lequel
l'au moins une fonction comprend une ouverture et/ou fermeture d'une porte de véhicule automobile, et/ou une fourniture d'une connexion Internet entre le système de commande (12) et le système de traitement de données (24) externe au véhicule automobile et/ou une fourniture d'une puissance de moteur prédéfinie et/ou une fourniture d'une liaison téléphonique entre le système de commande (12) et le système de traitement de données (24) externe au véhicule automobile et/ou une fourniture d'une fonction d'appel d'urgence du véhicule automobile (10).

7. Dispositif formant clé (22) portable, présentant une unité de communication (26), qui est conçue
- pour recevoir et pour mettre en mémoire un code d'identification (41) du dispositif formant clé (22) et un ensemble de données d'autorisation (43), qui est associé au code d'identification (41),
- pour fournir une liaison de communication de données (31) à une unité de communication (20) d'un système de commande (12) d'un véhicule automobile (10), dans lequel l'unité de communication (26) du dispositif formant clé (22) est conçu pour la transmission du code d'identification (41) et de l'ensemble de données d'autorisation (43),
- un élément de commande utilisateur (30) pour la réception d'une action de commande utilisateur d'un utilisateur, de préférence dans lequel l'élément de commande utilisateur (30) présente une zone de commande utilisateur tactile et/ou un écran tactile (46), et
- une unité de commande (28), qui est conçue pour produire une information d'image et/ou de texte et/ou vocale numérique en fonction de l'action de commande utilisateur reçue,
dans lequel l'unité de communication (26) est conçue pour transmettre l'information d'image et/ou de texte et/ou vocale numérique.

8. Système de commande (12), présentant un système de processeur (14), qui est conçu pour mettre en œuvre les étapes de procédé, concernant un système de commande (12), d'un mode de réalisation du procédé selon l'invention selon l'une quelconque des revendications 1-6.

9. Véhicule automobile (10), présentant un système de commande (12) selon la revendication 8.
